# EUROPEAN PATENT APPLICATION

(11) **EP 0 734 936 A2**
(43) Date of publication of application: **02.10.1996**
(21) Application number: 96104984.8
(22) Date of filing: 28.03.1996
(51) Int. Cl.: B62D 1/18

(54) **Device for facilitating angular adjustment of pin**

(30) Priority: 31.03.1995 JP 74823/95
(71) Applicant: Fuji Kiko Co., Ltd., Tokyo 103 (JP)
(72) Inventor: Kinoshita, Satoshi, c/o Fuji Kiko Co., Ltd., Kosai-shi, Shizuoka 431-04 (JP)
(74) Representative: Grünecker, Kinkeldey, Stockmair & Schwanhäusser Anwaltssozietät

(57) **Abstract**

An adjustment facilitating device for facilitating angular adjustment of a pin (32) relative to a bracket formed with an elongate slotlike opening rotatably receiving therethrough the pin (32). The device includes a wheel gear (58) rotatable with the pin (32) and formed with peripheral teeth (60), and a stop (62) including at least a pair of opposed splined portions (66). The splined portions (66) are slidably received in the elongate slotlike opening and arranged to interpose therebetween the wheel gear (58). The stop (62) includes a pair of opposed resilient portions (78) arranged in spaced relationship to the wheel gear (58). The resilient portions (78) are disposed between and connected to the splined portions (66) to bring the splined portions (66) into engagement with the peripheral teeth (60) of the wheel gear (58). The resilient portions (78) are stretchable to cause movement of the splined portions (66) away from the wheel gear (58) to disengage from the peripheral teeth (60), thereby to allow angular adjustment of the pin (32).

## Description

### BACKGROUND OF THE INVENTION

The present invention relates to a device for facilitating angular adjustment of a pin relative to a bracket.

Japanese Utility Model Application Second Publication No. 62-18121 discloses a steering column mounting structure for use in a vehicle. The structure includes a bracket, a distance bracket, and a pin supported thereon. The bracket is formed with a slot for receiving the pin. The pin is formed with a wheel gear engageable with a stop mounted to the pin. The stop has slide guide portions slidably received in the slot. An actuating lever is mounted to the pin in spaced relation to the stop and placed in a given angular position relative to the bracket. In the given angular position, the pin is retained on the bracket by frictional engagement between the bracket and the distance bracket.

In a case where, upon assembly, angular adjustment of the pin relative to the bracket is required in order to move the actuating lever to the given angular position, the stop must be removed from the pin before the angular adjustment of the pin. After completion of the angular adjustment, the stop is re-mounted to the pin. This removal and re-mounting operation of the stop is inconvenient.

### SUMMARY OF THE INVENTION

An object of the present invention is to provide a device for facilitating angular adjustment of a pin relative to a bracket, serving for increasing an operating efficiently.

According to one aspect of the present invention, there is provided an adjustment facilitating device for facilitating angular adjustment of a pin relative to a bracket formed with an elongate slotlike opening rotatably receiving therethrough the pin, comprising:
a wheel gear rotatable with the pin and formed with peripheral teeth; and
a stop including at least a pair of opposed splined portions, the at least a pair of opposed splined portions being slidably received in the elongate slotlike opening and arranged to interpose therebetween the wheel gear;
the stop including a pair of opposed resilient portions arranged in spaced relationship to the wheel gear, the pair of opposed resilient portions being disposed between and connected to the at least a pair of opposed splined portions to bring the at least a pair of opposed splined portions into engagement with the peripheral teeth of the wheel gear;
the pair of opposed resilient portions being stretchable to cause movement of the at least a pair of opposed splined portions away from the wheel gear to disengage from the peripheral teeth, thereby to allow angular adjustment of the pin.

### BRIEF DESCRIPTION OF THE DRAWINGS

Fig. 1 shows a mounting structure of a vehicle steering column into which an adjustment facilitating device of a first embodiment according to the present invention is incorporated;
Fig. 2 is an enlarged side view of the device as viewed in a direction indicated by the arrow D of Fig. 1;
Fig. 3 is a perspective view of essential parts of the device, showing a stop and a wheel gear with a pin;
Fig. 4 is a perspective view of essential parts of an adjustment facilitating device of a second embodiment according to the present invention, showing a modified stop;
Fig. 5 is a perspective view of essential parts of an adjustment facilitating device of a third embodiment according to the present invention, showing a further modified stop;
Fig. 6 is a side view of the first embodiment, partly in section, showing different positions of the stop of Fig. 1; and
Fig. 7 is a diagram similar to Fig. 2 but showing the stop placed in a position different from a position of Fig. 2;
Fig. 8 is a perspective view of a still further modified stop of a fourth embodiment;
Fig. 9 is a diagram similar to Fig. 8, but showing the stop placed in a position different from a position of Fig. 8; and
Fig. 10 shows a section of the stop of Fig. 8, taken along the line 10-10.

### DESCRIPTION OF THE PREFERRED EMBODIMENT

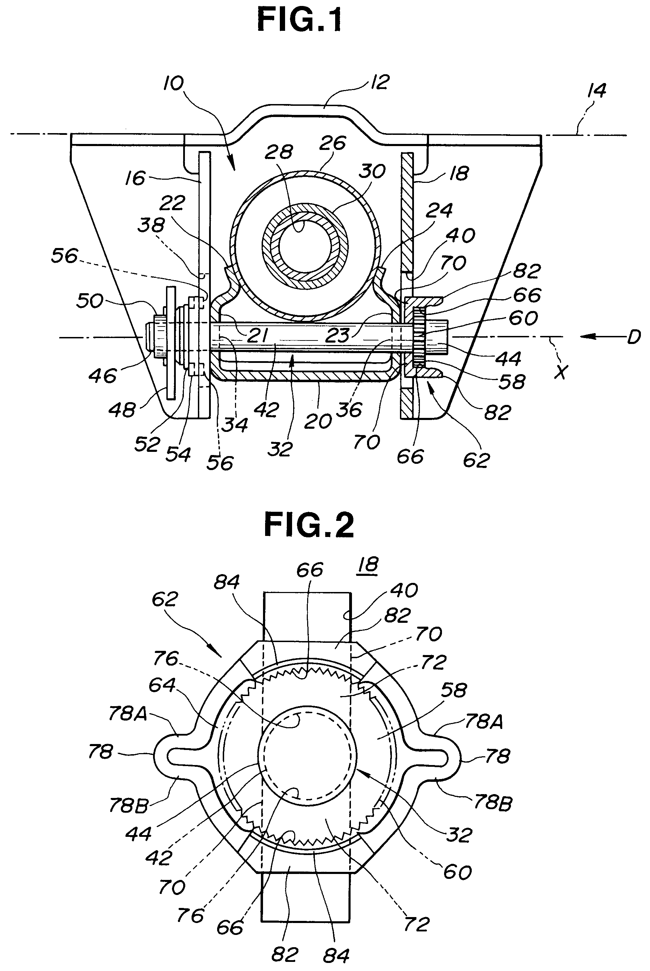

Referring now to Fig. 1, there is shown a first embodiment of an adjustment facilitating device for facilitating angular adjustment of a pin relative to a bracket formed with an elongate slotlike opening rotatably receiving therethrough the pin. In Fig. 1, the device is utilized in a vehicle steering column mounting structure.

As illustrated in fig. 1, the vehicle steering column 10 is supported by a bracket 12 mounted to a vehicle body 14. The bracket 12 is connected to the vehicle body 14 by means of suitable fastening members such as bolt and nut (not shown). The bracket 12 includes two opposingly spaced walls 16 and 18 between which a distance bracket 20 is slidably interposed. The distance bracket 20 is in the form of a channel having a generally U shape in section. The distance bracket 20 has a pair of opposed walls 21 and 23 formed with column-jacket support portions 22 and 24 which are connected with a tubular jacket 26 of the steering column 10. Inner and outer steering shafts 28 and 30 are concentrically disposed within the tubular jacket 26.

A pin 32 having an axis X passes through through holes 34 and 36 formed in the opposed walls 21 and 23 of the distance bracket 20 and through elongate slotlike openings 38 and 40 respectively formed in the spaced walls 16 and 18 of the bracket 12. The pin 32 is received rotatably about the axis X through the elongate slotlike openings 38 and 40. The pin 32 has a body portion 42, a larger-diameter head portion 44 disposed at one axial end of the body portion 42, and a threaded portion 46 disposed an opposite axial end of the body portion 42. The threaded portion 46 outwardly projects from the elongate slotlike opening 38 of the wall 16 of the bracket 12. An actuating lever 48 with a nut 50 is engaged with the threaded end portion 46 together with a washer 52. The actuating lever 48 is formed integrally with the nut 50. A retainer 54 is mounted to the pin 32 to be disposed between the washer 52 and the wall 16. The retainer 54 has a pair of opposed slide guide portions 56 received in the elongate slotlike opening 38. The retainer 54 is permitted to slidably move upward and downward as viewed in Fig. 1, along the elongate slotlike opening 38 through the slide guide portions 56.

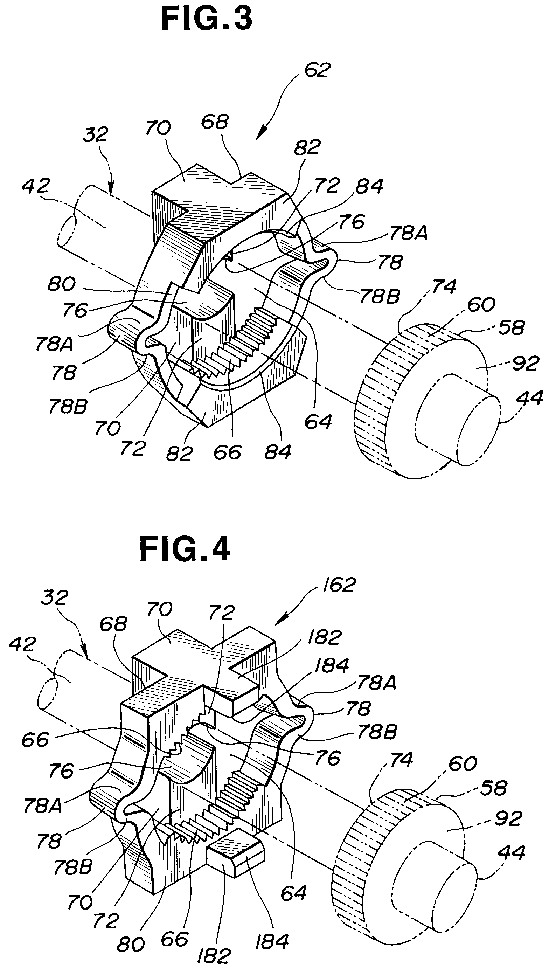

As illustrated in Figs. 1 and 3, a wheel gear 58 is mounted to the pin 32 and interposed between the body portion 42 and the larger-diameter head portion 44 of the pin 32. The wheel gear 58 and the head portion 44 project outwardly from the elongate slotlike opening 40 of the wall 18. The wheel gear 58 is formed with peripheral teeth 60 on an outer circumferential surface thereof. The wheel gear 58 with the pin 32 is rotatable about the axis X to be angularly moveable relative to the walls 16 and 18 of the bracket 12. The wheel gear 58 may be in the form of a radially outwardly extending flange formed integrally with the pin 32.

A stop 62 made of a synthetic resin material is mounted to the pin 32. As illustrated in Fig. 2, the stop 62 has a center opening 64 through which the pin 32 extends. The stop 62 includes at least a pair of opposed splined portions 66 partly defining the center opening 64. The opposed splined portions 66 are disposed in a diametrically opposed relation to each other. The opposed splined portions 66 are slidably received in the elongate slotlike opening 40 of the wall 18 of the bracket 12 through a pair of opposed slide guide portions 70, and arranged to interpose therebetween the wheel gear 60.

Specifically, as shown in Fig. 3, the stop 62 has one end face 68 formed with the opposed slide guide portions 70 connected with the opposed splined portions 66. The opposed slide guide portions 70 are disposed axially adjacent the opposed splined portions 66 and extend radially inwardly. The opposed slide guide portions 70 are formed integrally with the stop 62 and are so configurated as to be received in the elongate slotlike opening 40 to be slidably move therealong. The opposed slide guide portions 70 have mating surfaces 72 mating with one end face 74 of the wheel gear 58, as shown in Fig. 1. The provision of the mating surfaces 72 of the opposed slide guide portions 70 serves for preventing a removal of the stop 62 from the pin 32. The opposed slide guide portions 70 also have radial inner peripheral surfaces 76 mating with an outer peripheral surface of the body portion 42 of the pin 32, as shown in Figs. 1 and 3. The mating engagement between the radial inner peripheral surfaces 76 of the opposed slide guide portions 70 and the outer peripheral surface of the pin 32 serves for increasing a mechanical strength of the stop 62.

The stop 62 also includes a pair of opposed resilient portions 78 arranged in spaced relationship to the wheel gear 58 as shown in Fig. 2. The opposed resilient portions 78 are disposed between and connected to the opposed splined portions 66 to bring the opposed splined portions 66 into engagement with the peripheral teeth 60 of the wheel gear 58. The engagement of the opposed splined portions 66 with the peripheral teeth 60 allows a unitary motion of the pin 32 and the stop 62. The pin 32 with the stop 62 is prevented from an angular movement relative to the bracket 12 by engagement of the opposed slide guide portions 70 of the stop 62 with the elongate slotlike opening 40 of the wall 18.

Specifically, the pair of opposed resilient portions 78 of the stop 62 are disposed in a diametrically opposed relation to each other and radially spaced apart from the wheel gear 58. Thus, the opposed resilient portions 78 and the opposed splined portions 66 are circumferentially arranged on the stop 62. The opposed resilient portions 78 are formed integrally with the stop 62 to be in the form of a generally U-shaped channel as shown in Fig. 2. Each of the generally U-shaped resilient portions 78 extends radially outwardly from an outer periphery of the stop 62 and has segments 78A and 78B merging at their outer-most ends to each other.

The opposed resilient portions 78 of the stop 62 are stretchable to cause movement of the opposed splined portions 66 away from the wheel gear 58 to disengage from the peripheral teeth 60, thereby to allow angular adjustment of the pin 32 relative to the bracket 12.

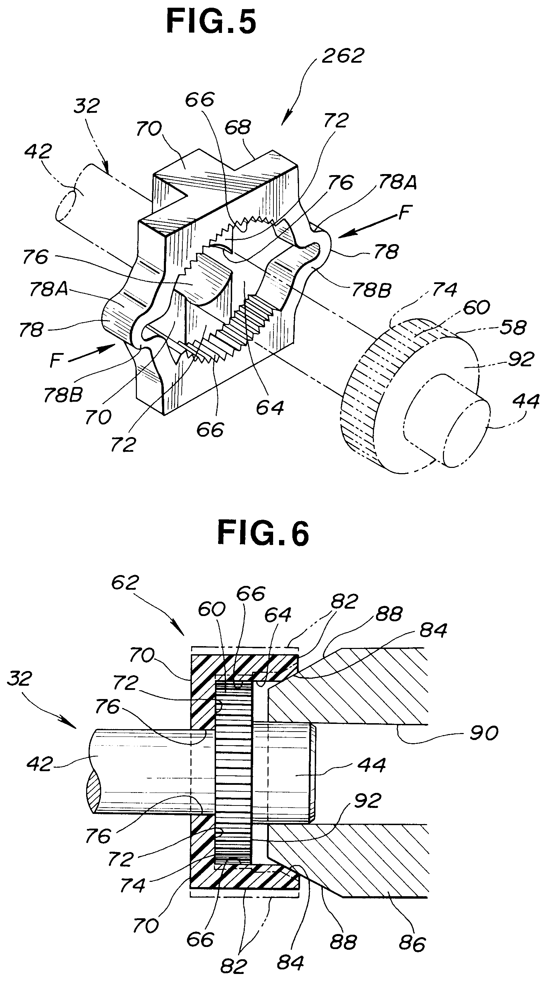

The stop 62 has an opposite end face 80 formed with a pair of opposed actuating tab portions 82 disposed axially adjacent the opposed splined portions 66. The opposed actuating tab portions 82 are formed integrally with the stop 62 and extend axially outwardly. The opposed actuating tab portions 82 are tapered radially outwardly and have arcuate actuating surfaces 84 which are curved along the opposed splined portions 66 and sloped radially outwardly. The stop 62 is operable by a tool 86 shown in Fig. 6, which has sloped faces 88 engageable with the actuating surfaces 84 of the opposed actuating tab portions 82.

Upon mounting the steering column 10 to the bracket 12, the actuating lever 48 is rotated on the pin 32 to move axially toward the wall 16 of the bracket 12. The axial movement of the actuating lever 48 causes the opposed walls 21 and 23 of the distance bracket 20 to be tightened between the spaced walls 16 and 18 of the bracket 12. This provides frictional engagement between the walls 16 and 18 of the bracket 12 and the walls 21 and 23 of the distance bracket 20, and the wall 18 of the bracket 12 and the one end face 68 of the stop 62. The frictional engagement serves for preventing a movement of the pin 32 along the elongate slotlike openings 38 and 40 of the bracket 12, and a movement of the distance bracket 20 with the tubular jacket 26 relative to the bracket 12. Thus, the steering column 10 is retained to the bracket 12.

In order to adjust a given angular position of the actuating lever 48 relative to the bracket 12 where the frictional engagement required for retaining the steering column 10 is provided, the stop 62 is operable by the tool 86 in such a manner as mentioned hereinafter.

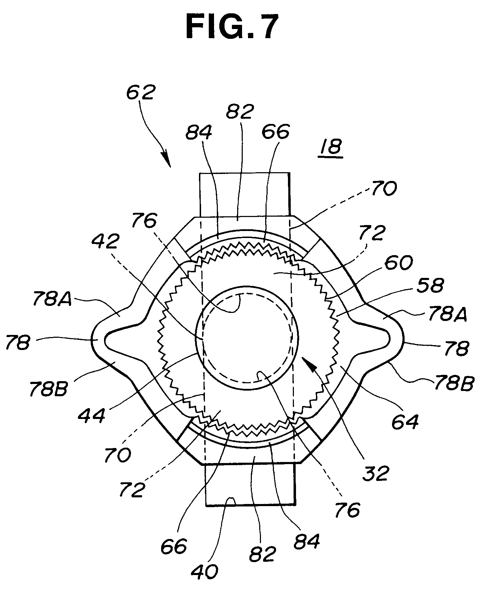

As illustrated in Fig. 6, the tool 86 having a cylindrical bore 90 is contacted with the stop 62 such that the bore 90 receives the head portion 44 of the pin 32 and at the same time the faces 88 of the tool 86 mate with the actuating surfaces 84 of the actuating tab portions 82. When the tool 86 moves toward an opposite end face 92 of the wheel gear 58 with keeping the contact between the faces 88 and the actuating surfaces 84, the stop 62 is urged by the tool 86 to move from a stationary position indicated in solid line to a deformed position indicated in broken line in Fig. 6. Fig. 7 also shows the stop 62 in the deformed position. At the stationary position of the stop 62, the opposed splined portions 66 are engaged with the peripheral teeth 60 of the wheel gear 58 to thereby prevent the rotation of the pin 32 relative to the bracket 12. At the deformed position, as shown in Fig. 7, of the stop 62, the actuating tab portions 82 resiliently expand radially outwardly and the generally U-shaped resilient portions 78 stretch such that a distance between the segments 78A and 78B of each of the resilient portions 78 increases. The opposed splined portions 66 are disposed in an opposed relation to each other in a direction of the expansion of the actuating tab portions 82. Thus, the opposed splined portions 66 are caused to move away from the wheel gear 58 and disengage from the peripheral teeth 60. The disengagement permits the pin 32 to be rotatable relative to the bracket 12, whereby the angular adjustment of the pin 32 is allowed. The stop 62 serves for readily performing the disengagement between the opposed splined portions 66 and the peripheral teeth 60 by using the tool 86.

Referring back to Fig. 4, a second embodiment according to the present invention is now explained. The second embodiment is similar to the above-mentioned first embodiment except a modified stop 162 substituted for the stop 62. Like reference numerals denote like parts, and therefore detailed explanations therefor are omitted.

The modified stop 162 is made of a synthetic resin material as well as the stop 62 of the first embodiment. As illustrated in Fig. 4, the modified stop 162 includes a pair of opposed actuating tab portions 182 in the form of a generally rectangular box shape. The opposed actuating tab portions 182 extend axially outwardly from the opposite end face 80 of the stop 162 and are tapered to be formed with sloped actuating surfaces 184. The stop 162 is engageable at the sloped actuating surfaces 184 with a tool having faces capable of mating with the sloped actuating surfaces 184. The second embodiment serves for facilitating the angular adjustment of the pin 32 by using the tool, as well as the above-described first embodiment.

Referring to Fig. 5, a third embodiment according to the present invention is now explained. The third embodiment is similar to the above-mentioned first embodiment except a further modified stop 262. Like reference numerals denote like parts and therefore detailed explanations therefor are omitted.

The further modified stop 262 is made of a synthetic resin material, similar to the first and second embodiments. As illustrated in Fig. 5, the stop 262 is provided with no actuating tab portions described in the first and second embodiments. The stop 262 is operable by merely depressing the opposed resilient portions 78 radially inwardly as indicated by arrows F in Fig. 5, without using the tool explained in the above-described first and second embodiments. The opposed splined portions 66 of the stop 262 are arranged substantially perpendicular to the depressing force applied to the opposed resilient portions 78. The depression causes the opposed resilient portions 78 to stretch such that a distance between the segments 78A and 78B of each generally U-shaped resilient portion 78 increases. Owing to the stretch of the opposed resilient portions 78, the opposed splined portions 66 are caused to move away from the wheel gear 58 to disengage from the peripheral teeth 60. Thus, the angular adjustment of the pin 32 is allowed by easy manual operation of the stop 262 of the third embodiment.

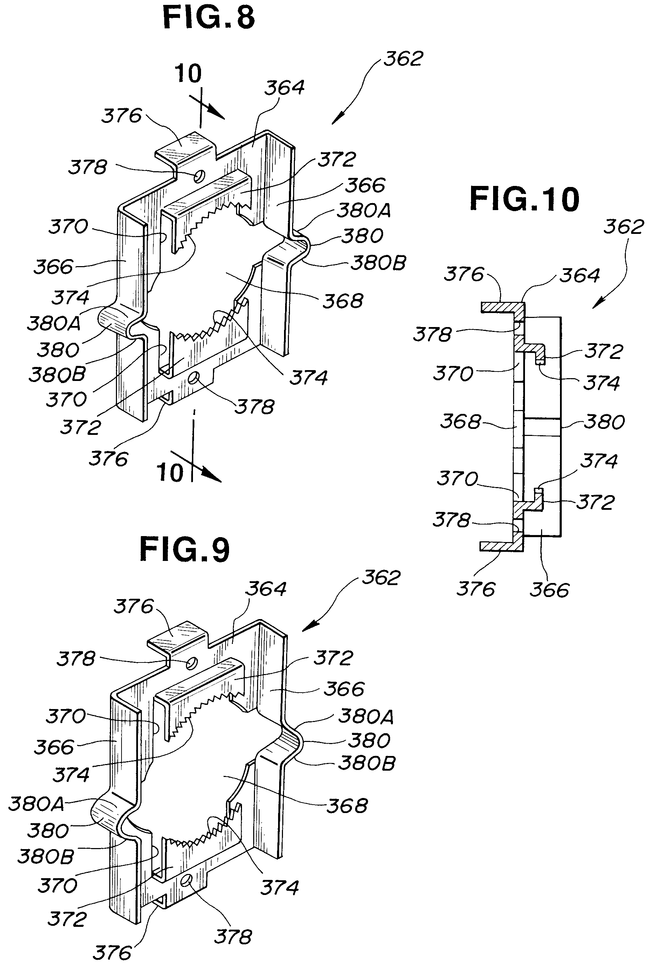

Figs. 8-10 show a still further modified stop 362 of a fourth embodiment according to the present invention. The fourth embodiment is similar to the first embodiment except the still further modified stop 362. The stop 362 is made of a spring steel material.

As illustrated in Fig. 8, the stop 362 has a generally rectangular body 364 and opposed side walls 366 extending uprightly from opposed peripheral edges of the body 364. The body 364 is formed with an opening 368 for receiving the pin 32 shown in Fig. 1. The stop 362 has a pair of opposed cutouts 370 communicating with the opening 368. The stop 362 has a pair of opposed flanges 372 having an L-shaped section shown in Fig. 10 are formed integrally with the body 364 of the stop 362. The opposed flanges 372 are connected with opposed edges of the cutouts 370 and extend over the cutouts 370. At least a pair of opposed splined portions 374 are disposed on opposed peripheral edges of the flanges 372 so as to interpose therebetween the wheel gear 58 of Fig. 1. The pair of opposed splined portions 374 are slidably received in the elongate slotlike opening 40 of the bracket 12 through a pair of opposed slide guide portions 376 disposed on opposed peripheral edges of the body 364 of the stop 362. Each of the opposed slide guide portions 376 is in the form of a flange formed integrally with the body 364 and configurated to be received in the elongate slotlike opening 40 of the bracket 12. A pair of holes 378 are provided near the opposed slide guide portions 376 for receiving operating rod portions of a tool (not shown).

The stop 362 includes a pair of opposed resilient portions 380 provided on the side walls 366 in spaced relationship to the wheel gear 58. The pair of opposed resilient portions 380 are in the form of a generally U-shaped channel extending outwardly from the side walls 366. Each of the pair of opposed resilient portions 380 includes segments 380A and 380B merging at their outer-most ends to each other. The pair of opposed resilient portions 380 are disposed between and connected to the opposed splined portions 374 to bring the opposed splined portions 374 into engagement with the peripheral teeth 60 of the wheel gear 58. The pair of opposed resilient portions 380 are stretchable as shown in Fig. 9, causing the movement of the opposed splined portions 374 away from the wheel gear 58 to disengage from the peripheral teeth 60 to thereby allow angular adjustment of the pin 32. The stop 362 is operable readily manually, namely by depressing radially inwardly the pair of opposed resilient portions 380 as explained in the third embodiment. Alternatively, the stop 362 of the fourth embodiment is easily operable by using the tool in such a manner that the operating rod portions of the tool move away from each other after inserting the operating rod portions into the holes 378 of the body 364.

As be appreciated from the above description, the device according to the present invention is capable of performing the angular adjustment of the pin relative to the bracket without removing the stop from the pin, serving for facilitating the angular adjustment of the pin.

Further, since the opposed slide guide portions of the stop of the device each have mating surfaces engaged with the outer peripheral surface of the pin, the device dispenses with nuts conventionally provided for preventing removal of the stop from the pin. This serves for reducing the number of parts, resulting in saving the manufacturing cost.

While preferred embodiments of the invention have been shown and described, other embodiments will become apparent to those skilled in the art. Accordingly, the invention should be interpreted to include all possible embodiments and modifications which can be embodied without departing from the principle of the invention set forth in the following claims. For example, though the shown embodiments of the device are applied to a vehicle steering column mounting structure, it may be possible to apply the device to other structures including a bracket and a pin angularily adjustable relative to the bracket.

## Claims

1. An adjustment facilitating device for facilitating angular adjustment of a pin relative to a bracket formed with an elongate slotlike opening rotatably receiving therethrough the pin, comprising:
a wheel gear rotatable with the pin and formed with peripheral teeth; and
a stop including at least a pair of opposed splined portions, said at least a pair of opposed splined portions being slidably received in the elongate slotlike opening and arranged to interpose therebetween said wheel gear;
said stop including a pair of opposed resilient portions arranged in spaced relationship to said wheel gear, said pair of opposed resilient portions being disposed between and connected to said at least a pair of opposed splined portions to bring said at least a pair of opposed splined portions into engagement with said peripheral teeth of said wheel gear;
said pair of opposed resilient portions being stretchable to cause movement of said at least a pair of opposed splined portions away from said wheel gear to disengage from said peripheral teeth, thereby to allow angular adjustment of the pin.

2. The device as claimed in claim 1, wherein said pair of opposed resilient portions are in the form of a generally U-shaped channel.

3. The device as claimed in claim 1, wherein said stop includes a pair of opposed slide guide portions received in the elongate slotlike opening.

4. The device as claimed in claim 3, wherein said pair of opposed slide guide portions have radial inner peripheral surfaces mating with said pin.

5. The device as claimed in claim 3, wherein said stop includes a pair of opposed actuating tab portions disposed adjacent said at least a pair of opposed splined portions, said pair of opposed actuating tab portions being engageable with a tool to resiliently expand radially outwardly.

6. The device as claimed in claim 5, wherein said stop has one end face and an opposite end face, said pair of opposed slide guide portions being disposed on said one end face and said pair of opposed actuating tab portions being disposed on said opposite end face.

7. The device as claimed in claim 1, wherein said stop is made of a synthetic resin material.

8. The device as claimed in claim 1, wherein said stop is made of a spring steel material.
